# EUROPEAN PATENT APPLICATION

(11) **EP 2 501 026 A2**
(43) Date of publication of application: **19.09.2012**
(21) Application number: 11305532.1
(22) Date of filing: 06.05.2011
(51) Int. Cl.: H02M 1/36

(54) **Optimized software-driven soft-start algorithm**

(30) Priority: 11.03.2011 US 46321
(71) Applicant: Renault S.A.S., 92100 Boulogne-Billancourt (FR)
(72) Inventor: Trenchs, Albert, 43800, Valls (ES); Fernandez, José-Gabriel, 43800, Valls (ES)

(57) **Abstract**

A soft-start charging method, computer-readable medium, and apparatus for controlling charging of at least one capacitor by obtaining a zero-crossing time, which is a time when a zero-crossing of a source voltage will occur; obtaining an advance time, which is an amount of time; and calculating a trigger time based on the advance time and the zero-crossing time. The method also includes triggering a switch to close at the calculated trigger time; charging the at least one capacitor with the source voltage with the closing of the switch for a charging time period; and opening the switch at the end of the charging time period. The steps of obtaining the zero-crossing time, the obtaining the advance time, the calculating, the triggering, the charging, and the opening are repeated until the at least one capacitor is fully charged.

## Description

The present invention generally relates to the electronic field and more precisely to a soft-start charging method for capacitors.

Currently with hardware control stages, progressive charging from a double-rectified sinusoid signal is done by a linear pulse-width modulation (PWM) duty cycle increase. However, a drawback with this method is that the linear increase of PWM does not provide a "uniform" voltage increase and high current peaks are present that cause a large amount of electromagnetic interference (EMI) and can reduce the life of the involved electrical components.

In light of the foregoing, there is a need for an optimized software-driven soft start-algorithm in which progressive charging of capacitors is performed in order to reduce, if not eliminate, respective current peaks due to capacitor voltage changes.

The present invention includes a soft-start charging method for at least one capacitor, the method including: obtaining a zero-crossing time, which is a time when a zero-crossing of a source voltage will occur; obtaining an advance time, which is an amount of time; and calculating a trigger time based on the advance time and the zero-crossing time. The method also includes triggering a switch to close at the calculated trigger time; charging the at least one capacitor with the source voltage with the closing of the switch for a charging time period; and opening the switch at the end of the charging time period. The steps of obtaining the zero-crossing time, the obtaining the advance time, the calculating, the triggering, the charging, and the opening are repeated until the at least one capacitor is fully charged.

The present invention also includes a non-transitory computer-readable storage medium storing instructions which when executed by a processor cause a soft-start charging method to be performed, the method including: obtaining a zero-crossing time, which is a time when a zero-crossing of a source voltage will occur; obtaining an advance time, which is an amount of time; and calculating a trigger time based on the advance time and the zero-crossing time. The method also includes triggering a switch to close at the calculated trigger time; charging the at least one capacitor with the source voltage with the closing of the switch for a charging time period; and opening the switch at the end of the charging time period. The steps of obtaining the zero-crossing time, the obtaining the advance time, the calculating, the triggering, the charging, and the opening are repeated until the at least one capacitor is fully charged.

In addition, the present invention includes soft-start charging apparatus for charging at least one capacitor, the apparatus including a switch, a zero-crossing unit configured to obtain a zero-crossing time, which is a time when a zero-crossing of a source voltage will occur, and an advance time unit configured to obtain an advance time, which is an amount of time. The apparatus also includes a trigger time calculation unit configured to calculate a trigger time based on the advance time and the zero-crossing time, a triggering unit configured to trigger the switch to close at the calculated trigger time, and a charging unit configured to charge the at least one capacitor with the source voltage with the closing of the switch for a charging time period. The switch is opened at the end of the charging time period. The processes of obtaining the zero-crossing time, obtaining the advance time, calculating of the trigger time, triggering the switch to close, charging the capacitor, and opening the switch are repeated until the at least one capacitor is fully charged.

A more complete appreciation of the invention and many of the attendant advantages thereof will be readily obtained as the same becomes better understood by reference to the following detailed description when considered in connection with the accompanying drawings, wherein:
Figure 1 is a circuit diagram of an embodiment of the present invention;
Figure 2 is an oscilloscope scan created by a circuit according to an embodiment of the present invention;
Figure 3 is an oscilloscope scan created by a circuit according to an embodiment of the present invention;
Figure 4 is a circuit diagram of an embodiment of the present invention;
Figure 5 is a circuit diagram of an embodiment of the present invention;
Figure 6 is a circuit diagram of an embodiment of the present invention;
Figure 7 is a flow chart showing a method of an embodiment of the present invention;
Figure 8A is an oscilloscope scan created by a circuit according to an embodiment of the present invention;
Figure 8B is an oscilloscope scan created by a circuit according to an embodiment of the present invention;
Figure 9 is an oscilloscope scan created by a circuit according to an embodiment of the present invention;
Figure 10 is an oscilloscope scan created by a circuit according to an embodiment of the present invention;
Figure 11A is a graph showing signal produced by an embodiment of the present invention;
Figure 11B is a graph showing signal produced by an embodiment of the present invention; and
Figure 11C is a graph showing signal produced by an embodiment of the present invention.

Referring now to the drawings, wherein like reference numerals designate identical or corresponding parts throughout the several views.

An embodiment of the present invention uses a memory encoded with a PWM algorithm for performing progressive charging of one or more capacitors. The progressive charging of the capacitors allows for duty cycle increases which can minimize the energy in current peaks. By ensuring reduced-energy current peaks in the power capacitor during soft-start charging, electromagnetic interference (EMI) is minimized. An embodiment of the present invention also applies an exponential or sinusoidal growth rate to a PWM-duty-cycle increase to ensure a linear increase of the capacitors current charging energy. Ideally, a linear voltage increase in the capacitors would result in a constant charge current. The charging method and/or apparatus of the present invention can be used for the charging of automobiles, electric vehicles, or electric power management for AC/DC, DC/DC, DC/AC and provides a capacitive stage at the DC bus big enough for stabilization purposes while allowing careful pre-charging when the system is connected.

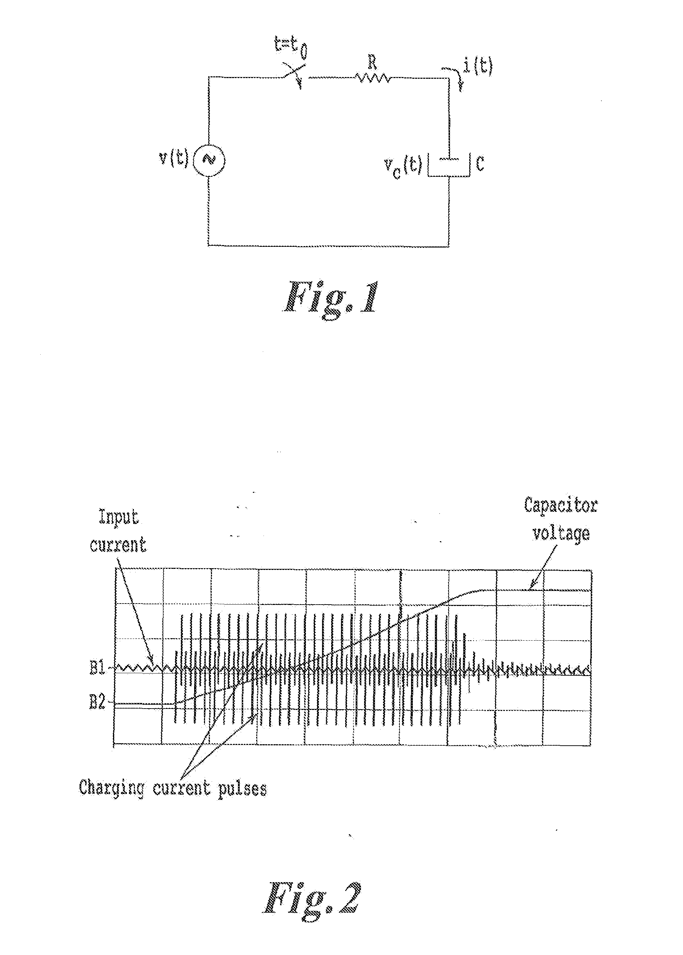

Turning now to Figure 1, Figure 1 is a circuit diagram of an embodiment of the present invention. The circuit of Figure 1 includes a time-varying voltage source v(t), which can be, for example, a sinusoidal voltage source. The circuit in Figure 2 also includes a resistor R, and a switch located between the voltage source v(t) and the resistor R. Also in the circuit of Figure 2 is a capacitor C. More than one capacitor could replace the capacitor shown in Figure 2. Also, it is possible that the circuit contains some other type of energy storage device other than a capacitor. The circuit in Figure 1 has a current i(t) that flows through the circuit, and the voltage of the capacitor C is V_{c}(t). The switch shown in the circuit diagram could be a thyristor, for example, that is controlled by a programmed microcontroller.

The present invention is directed to the charging of a capacitor or capacitors C with a train of pulses from the mains supply v(t) (for example a sinusoidal source), in an effort to limit the charging current i(t) peak energy. The mains supply v(t) could be another type of time-varying voltage source other than a sinusoidal source. Charging the capacitor or capacitors C with a train of pulses reduces the electromagnetic compatibility (EMC), and stress on the capacitor or capacitors C.

An embodiment of the present invention utilizes a microcontroller 9 including a computer-readable storage medium 35 programmed with software to vary the width of pulses as a further improvement towards current peaks energy averaging. The computer-readable storage medium 35 could be, for example, a RAM, ROM, SRAM, EPROM, EEPROM, or a Flash. Also, it is envisioned that the software of the present invention could be stored on a hard disk drive, compact disk, digital video disc, bluray disc, mini-disc, or any other type of computer disc.

Next, with reference to Figure 1, an explanation will be given for the reaction of the circuit to the closure of the switch at time, t₀ focused on showing the charging current dependability of each tₙ. Generally, the current in the capacitor C will be shifted by 90° to its voltage, if the voltage is sinusoidal. Also, capacitor voltage V_{c}(t) should be kept in "continuity" while current may have abrupt changes in value (e.g. peaks).

In Figure 1, if v(t) = V cos(ωt) then current and voltage relationships are: $\begin{matrix}i \left(t\right) = C ⁢ \frac{\partial {v}_{c} \left(t\right)}{\partial t} \\ v \left(t\right) = i \left(t\right) ⁢ R + {v}_{c} \left(t\right)\end{matrix} }$ $\begin{matrix}v \left(t\right) = RC ⁢ \frac{\partial {v}_{c} \left(t\right)}{\partial t}\end{matrix} + {v}_{c} \left(t\right)$

The solution is: ${v}_{c} \left(t\right) = \frac{V}{\sqrt{1 + {ω}^{2} ⁢ {R}^{2} ⁢ {C}^{2}}} ⁢ cos \left(ωt-arctan\left(ωRC\right)\right) + {K}_{1} ⁢ {e}^{{- \left(t-{t}_{0}\right)}_{RC /}}$ $i \left(t\right) = \frac{V}{\sqrt{{R}^{2} + \frac{1}{{ω}^{2} ⁢ {C}^{2}}}} ⁢ cos \left(ωt+arctan\left(\frac{1}{ωRC}\right)\right) + {K}_{2} ⁢ {e}^{{- \left(t-{t}_{0}\right)}_{RC /}}$

K₁ and K₂ set for the initial conditions at t = t0.

In Figure 1, at t = t₀ we know v(t₀) and v_{c}(t₀), thus: ${v}_{c} \left({t}_{0}\right) = \frac{V}{\sqrt{1 + {ω}^{2} ⁢ {R}^{2} ⁢ {C}^{2}}} ⁢ cos \left({ωt}_{0}-arctan\left(ωRC\right)\right) + {K}_{1}$ $i \left({t}_{0}\right) = \frac{V}{\sqrt{{R}^{2} + \frac{1}{{ω}^{2} ⁢ {C}^{2}}}} ⁢ cos \left({ωt}_{0}+arctan\left(\frac{1}{ωRC}\right)\right) + {K}_{2}$ $i \left({t}_{0}\right) = \frac{v \left({t}_{0}\right) - {v}_{c} \left({t}_{0}\right)}{R}$

Thus, depending on the initial status of the capacitor C (its voltage and its current, for example from previous pulses), we may find K₁ and K₂. However, K₁ and K₂ are to comply with the continuity of voltage signals.

Turning again to Figure 1, if v(t) =Vsin(ωt), the general rules are: $\begin{matrix}\begin{matrix}\begin{matrix}i \left(t\right) = C ⁢ \frac{\partial {v}_{c} \left(t\right)}{\partial t} \\ v \left(t\right) = i \left(t\right) ⁢ R + {v}_{c} \left(t\right)\end{matrix}\end{matrix} } \\ v \left(t\right) = RC ⁢ \frac{\partial {v}_{c} \left(t\right)}{\partial t} + {v}_{c} \left(t\right)\end{matrix}$

The solution is: ${v}_{c} \left(t\right) = \frac{V}{\sqrt{1 + {ω}^{2} ⁢ {R}^{2} ⁢ {C}^{2}}} ⁢ cos \left(ωt+arctan\left(\frac{1}{ωRC}\right)\right) + {K}_{3} ⁢ {e}^{{- \left(t-{t}_{0}\right)}_{RC /}}$ $i \left(t\right) = \frac{V}{\sqrt{{R}^{2} + \frac{1}{{ω}^{2} ⁢ {C}^{2}}}} ⁢ cos \left(ωt-arctan\left(ωRC\right)\right) + {K}_{4} ⁢ {e}^{{- \left(t-{t}_{0}\right)}_{RC /}}$ K₃ and K₄ are set for the initial conditions at t = t₀.

Thus, in summary: $v \left(t\right) = V cos \left(ωt\right) { \begin{matrix}{v}_{c} \left(t\right) & = {V}_{c} cos \left(ωt+{ϕ}_{1}\right) + {K}_{1} ⁢ {e}^{{- \left(t-{t}_{0}\right)}_{τ /}} \\ i \left(t\right) & = Icos ⁢ \left(ωt+{ϕ}_{2}\right) + {K}_{2} ⁢ {e}^{{- \left(t-{t}_{0}\right)}_{τ /}}\end{matrix}$ $v \left(t\right) = V sin \left(ωt\right) { \begin{matrix}{v}_{c} \left(t\right) & = {V}_{c} cos \left(ωt+{ϕ}_{3}\right) + {K}_{3} ⁢ {e}^{{- \left(t-{t}_{0}\right)}_{τ /}} \\ i \left(t\right) & = Icos ⁢ \left(ωt+{ϕ}_{4}\right) + {K}_{4} ⁢ {e}^{{- \left(t-{t}_{0}\right)}_{τ /}}\end{matrix}$

If we consider now a series of a number of pulses, we have the closure of the switch at different to, t₁... tₙ times. For each variable, at each tᵢ we have the combination of a sinusoidal and exponential factors. $v \left(t\right) = V cos \left(ωt\right) { \begin{matrix}{v}_{c} \left(t\right) & = {V}_{c} cos \left(ωt+{ϕ}_{1}\right) + {K}_{1} ⁢ {e}^{{- \left(t-{t}_{0}\right)}_{τ /}} \\ i \left(t\right) & = Icos ⁢ \left(ωt+{ϕ}_{2}\right) + {K}_{2} ⁢ {e}^{{- \left(t-{t}_{0}\right)}_{τ /}}\end{matrix}$ $v \left(t\right) = V sin \left(ωt\right) { \begin{matrix}{v}_{c} \left(t\right) & = {V}_{c} cos \left(ωt+{ϕ}_{3}\right) + {K}_{3} ⁢ {e}^{{- \left(t-{t}_{0}\right)}_{τ /}} \\ i \left(t\right) & = Icos ⁢ \left(ωt+{ϕ}_{4}\right) + {K}_{4} ⁢ {e}^{{- \left(t-{t}_{0}\right)}_{τ /}}\end{matrix}$

In an embodiment of the present invention shown in the circuit diagram of Figure 1, at any given starting time tᵢ the "shape" of the exponential factor will be the same, as it depends on (t - ti), while its maximum amplitude will depend on the v(tᵢ) - v_{c}(tᵢ) difference. On the other hand, the cosine factor amplitude is constant as it depends on the circuit parameters, but the "shape" will change, as they depend on t. Therefore, if the charging of the capacitor C is controlled by using short pulses of v(t), there will be different values of the current peaks depending on the selected t (in a periodic way) and on the voltage difference between the input voltage v(t) and the capacitor voltage V_{c}(t).

Thus, we have the following formulas: $v \left(t\right) = V cos \left(ωt\right) { \begin{matrix}{v}_{c} \left(t\right) & = {V}_{c} cos \left(ωt+{ϕ}_{1}\right) + {K}_{1} ⁢ {e}^{{- \left(t-{t}_{0}\right)}_{τ /}} \\ i \left(t\right) & = Icos ⁢ \left(ωt+{ϕ}_{2}\right) + {K}_{2} ⁢ {e}^{{- \left(t-{t}_{0}\right)}_{τ /}}\end{matrix}$ $v \left(t\right) = V sin \left(ωt\right) { \begin{matrix}{v}_{c} \left(t\right) & = {V}_{c} cos \left(ωt+{ϕ}_{3}\right) + {K}_{3} ⁢ {e}^{{- \left(t-{t}_{0}\right)}_{τ /}} \\ i \left(t\right) & = Icos ⁢ \left(ωt+{ϕ}_{4}\right) + {K}_{4} ⁢ {e}^{{- \left(t-{t}_{0}\right)}_{τ /}}\end{matrix}$

A current peak in the circuit of Figure 1 will create electromagnetic interference (EMI) and also causes stress on the capacitor C, which can reduce the working life of the capacitor C. On the other hand, it is advantageous to charge the capacitors as soon as possible (to start the real functionality of the capacitors), and in this sense it is desirable to have a higher charging current, but with the lowest possible peaks (the EMI generators).

Thus, in an embodiment of the present invention, the charging circuit is controlled in order to provide a low voltage difference between the input voltage v(t) and the capacitor voltage V_{c}(t), to reduce the exponential effect. Also, the switch device shown in Figure 1, for example, between the input voltage v(t) and the resistor R, could be a thyristor or multiple thyristors that is commanded by a controller (e.g. software algorithm, microcontroller, etc.) to be placed in an ON state, but will switch off the thyristor whenever the anode-to-cathode voltage of the thyristor is zero.

As the initial capacitor voltage V_{c}(t) is zero, the present invention uses the zero crossing of the input voltage v(t) (i.e. when the time varying voltage is zero) for synchronization, and the microcontroller switches ON the thyristor at a short time before the zero crossing of the input voltage, thus providing a small voltage difference between the capacitor voltage V_{c}(t) and the input voltage v(t). This synchronization method reduces high peaks of current to the capacitor C.

By controlling the opening of the thyristor in advance of the zero crossing at progressively earlier times, a progressive charge of the capacitor C is obtained while the voltage difference (v(t)- V_{c}(t)) is kept low, thus minimizing the exponential effect. However, if the switch (e.g. thryistor) is only turned ON once per cycle, or twice if rectified, keeping the voltage difference between the input voltage v(t) and the capacitor voltage V_{c}(t), low reduces the time of the charging period, and therefore lengthens the total amount of time to reach a full-charge of the capacitor C or capacitors.

Now we consider the current peak due to the other factor in formulas (1) and (2) above: the sinusoidal factor. The peak energy is directly related with the pulse height by pulse width of the current.

In the embodiment of Figure 1, in the capacitor C, sinusoidal current is shifted 90° from the voltage. The circuit is controlled by a microcontroller, for example, so that the beginning of the "opening" of the thyristor path is near the zero crossing of the voltage. At this time, the current i(t) will be near the maximum value, because the capacitor current is shifted 90° from voltage.

In Figure 1, the microcontroller triggers ON (i.e. closes) the thyristor each time progressively from the zero crossing, until having the maximum voltage value, so that the capacitor gets charged to the maximum value. The thyristor will turn OFF (open) as soon as the voltage between its anode and cathode is zero (or negative).

The present invention uses software to control the synchronization on zero crossings and control the progressive triggering of the thyristor. The thyristor is controlled so that the energy at each current peak is equal to the energy of each other current peak, so that no peaks exist that are too high, while keeping the expected charging rate.

In the circuit of Figure 1, when the voltage is at the maximum value, the current is at its minimum value. Thus, the current pulses reduce in their peak value as they reach the voltage maximum period.

In order to keep the energy constant for all peaks the thyristor triggering times are controlled so that the widths of the pulses increase progressively. Moreover, the rate of increasing will be sinusoidal following the phase of the voltage, as being opposed to the current. For example, if the voltage is a cosine this rate will be as a cosine, while the current will be a sine. The thyristor triggering times can be controlled, for example, by an internal table stored in memory, with the table data being obtained from previously measured data, to get the rate to apply at any time.

Turning now to Figure 2, Figure 2 is graph showing the circuit characteristics of an embodiment of the present invention. In Figure 2, signal B 1 is the input current, and is full-wave rectified prior to charging the capacitor. The capacitor voltage B2, although stepped, increases in an approximately linear fashion, so that there is a nearly constant capacitor voltage ramp-up (equivalent to "constant" current charge). On the left side of the graph, the capacitor voltage starts at the initial voltage of the capacitor and is steady. During the charging phase of the capacitor, in the area in the middle of the graph, the capacitor voltage increases and the current peaks are increased. The current peaks of signal B1 shown in Figure 2 are substantially equal, as well as the charging periods. Once the capacitor becomes fully charged, the capacitor voltage shown on signal line B2 steadies, and the current peak values decrease. Also, during the charging phase, the middle portion of Figure 2 when the voltage increases linearly, the charging current pulses have nearly uniform values and thus the charging energy is evenly distributed. Negative pulses in input current would become positive after full-wave rectifying.

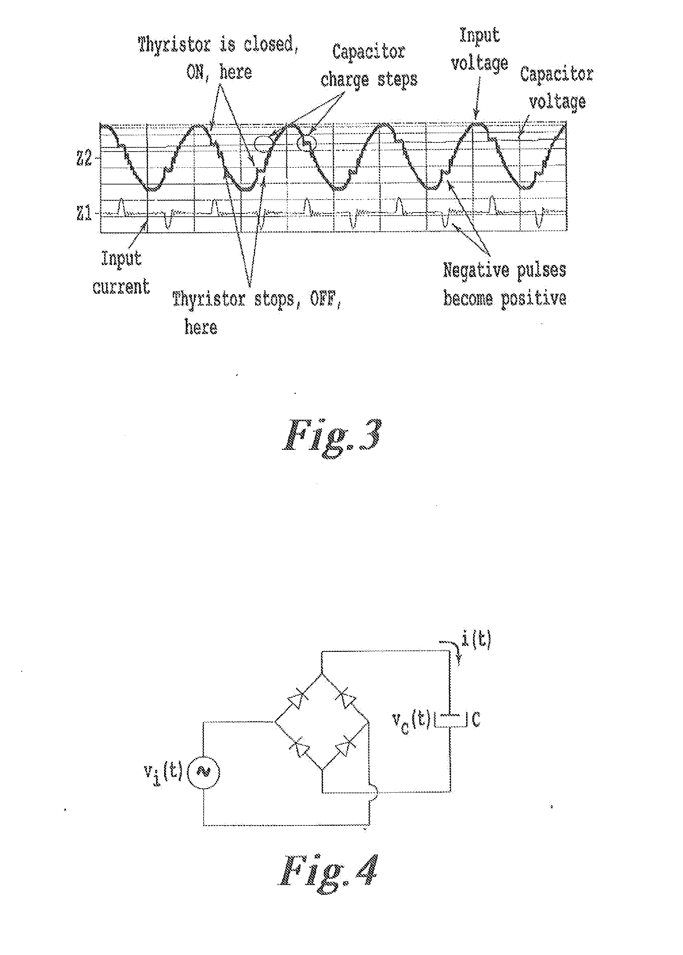

Figure 3 is an oscilloscope scan from a circuit of an embodiment of the present invention. The input signal is full-wave rectified prior to charging the capacitor. Signal Z1 shown in Figure 3 is the input current, while signal Z2 is the input voltage. In Figure 3, the thyristor will turn OFF when the increasing capacitor voltage (cathode) equals the input voltage (anode).

Figure 4 is a circuit diagram of a rectifying stage. The circuit of Figure 4 includes a voltage source vᵢ(t) which is outputted into an array of four diodes. It is envisioned that a different number of diodes could be present in the diode array. Also in the circuit of Figure 4, there are two connections between the diode array and a capacitor C, which has a voltage V_{c}(t). Also, there are two connections between the voltage source vᵢ(t) and the diode array. As a result of the circuit in Figure 4, there is full-wave rectifying capability (due to the diodes) and output stabilization (due to the capacitor). At the time the supply is connected, however, there is a great current peak due to the following capacitor working law: $i \left(t\right) = C ⁢ \frac{\partial {v}_{c} \left(t\right)}{\partial t}$

Thus, in order to minimize current peaks (and thus EMC and ageing of the capacitor) it is optimal to control charging so that there is constant current charging, which means a linear increase in voltage. Also, it is advantageous to have a smooth output and a mechanism for switching off the system (e.g. full AC/DC converter).

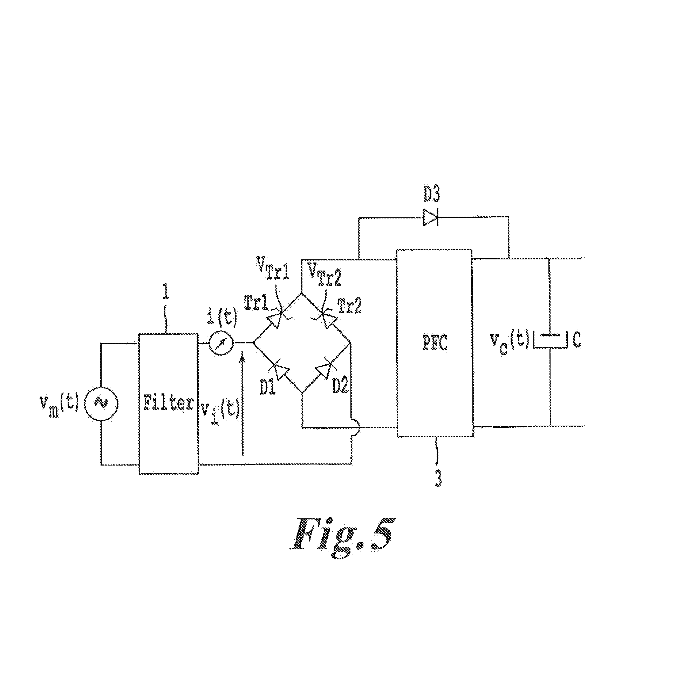

Figure 5 is a diagram of a circuit for performing an optimized software-driven soft-start algorithm of the present invention. The circuit in Figure 5 includes a time-varying voltage source Vm(t), which could be, for example, a mains supply having a voltage in the range of 100V-240V and a frequency of 50 or 60 Hz. The voltage source Vm(t) is connected to a filter 1 which isolates and protects the circuit to the left of the filter 1 from the circuit on the right side of the filter 5 and vice-versa, while letting signals pass through the filter 1. The measured current outputted from filter 1 is i(t) and the voltage outputted from the filter 1 is vᵢ(t). The circuit in Figure 5 also includes two diodes D1, D2 and two thyristors Tr1, Tr2 in a diamond pattern. The two thyristors Tr1, Tr2 have triggering input voltages V_{Tr1} and V_{Tr2}, respectively. A conductor connects thyristors Tr1 and Tr2 to a power factor converter (PFC) 3. Specifically, the cathode of Tr1 and the cathode of Tr2 are connected to each other, and the cathodes of Tr1 and Tr2 are connected to the PFC 3. The anode of diode D1 is connected to the anode of diode D2. Also, the cathode of D1 is connected to the anode of Tr1, while the cathode of D2 is connected to the anode of Tr2. The PFC 3 is in parallel to a capacitor C with a voltage V_{c}(t). However, more than one capacitor could be connected to the PFC 3. Lastly, the circuit in Figure 5 includes a diode D3.

In the circuit of Figure 5, thyristors Tr1 and Tr2 enable switching ON and OFF the system in a simple and low cost manner. PFC 3 improves AC/DC conversion (e.g. efficiency, smoothness, etc.). Diode D3 is a by-pass for a pre-charge period which will be explained below. When a thyristor Tr1 or Tr2 is switched ON, this means that the current is allowed to flow, that is, the switch is closed. Conversely, when a thyristor is switched OFF, it means that there is no current flow, that is, the switch is open. In an embodiment of the present invention as shown in Figure 5, there are two working modes: a stable mode and a pre-charge mode. The two modes will be discussed next in detail.

In the stable mode, Vc is kept charged with the supply from Vᵢ(t), and both Tr1 and Tr2 with PFC 3 provide the proper signal conditioning to convert a.c. to d.c. Thyristors Tr1 and Tr2 are kept closed (ON) during respective driving cycles by the triggering voltage V_{Tr1} & V_{Tr2}. To ensure both thyristors Tr1 and Tr2 are ON, (to eliminate unexpected closures due to noise...) the triggering voltage is a trend of pulses (e.g. duty of 50%, frequency of 100 kHz) during all half-period of the input signal.

In the pre-charge mode, Vc starts at zero volts (or a low voltage). If Vᵢ(t) is connected directly, like in the stable-mode, the capacitor C or capacitors would generate a peak of current. This is bad for EMC requirements and also for the capacitor life and reliability of the other components. Then, to achieve a linear rate of increase for the capacitor voltage, one method is to close thyristors Tr1 and Tr2 at small, regular periods, to enable charging of C in steps or increments.

When either of the thyristors Tr1 or Tr2 are ON, the current value will be a function of the voltage Vi(t). In this case the charging current will flow through D3, as PFC 3, which is mainly inductive, will block any spurious current flow. On the other hand, to have a thyristor Tr1 or Tr2 ON, it is necessary to have a pulse in the respective thyristor gate input V_{TR1} or V_{TR2}, together with a positive voltage between the anode, Vi(t), and the cathode, Vc(t), that is (Vi(t)>Vc(t)). This means that it is only necessary to trigger the thyristors Tr1 and Tr2 ON and the thyristors Tr1 and Tr2 will go OFF (open) whenever the Vc(t) voltage is higher than the Vi(t) voltage.

Thus, the thyristors will switch to OFF at any zero crossing of Vi(t) (minimum Vc(t) is zero). Then, in order to have Tr1 and Tr2 closed at small, regular periods, and considering these will end at zero-crossing of Vi(t), the thyristors are controlled to close a short time in advance of the zero-crossing of Vi(t).

The charging procedure of the present invention will start closing the thryistors near to a voltage zero-crossing to have a low voltage difference between Vi(t) and Vc(t). There will be progressively longer charging periods while the capacitor gets charged. In fact, the respective thyristor (Tr1 or Tr2) will turn OFF (Vi - Vc = 0) sooner each time, as at each period Vc will start charging at the last voltage of the previous period.

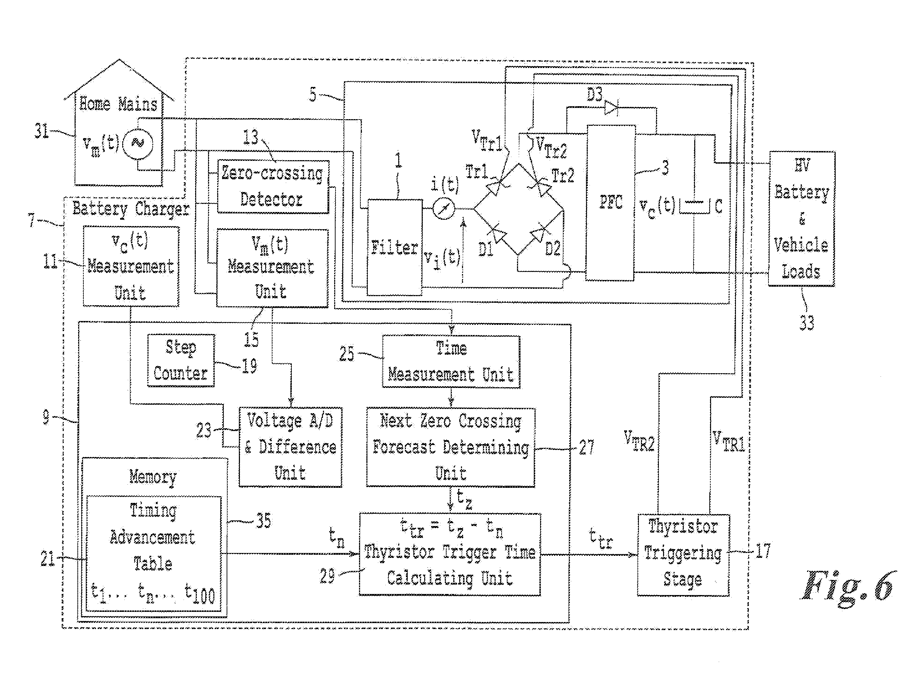

Turning now to Figure 6, Figure 6 is a block diagram showing the components involved in the optimized software-driven soft-start method of the present invention. In Figure 6, a battery charger 7 includes a charger power stage 5, which contains the circuit components shown in detail in Figure 5. The battery charger 7 also includes a microcontroller 9 which controls the triggering of the thyristors Tr1 and Tr2. The battery charger 7 measures the input voltage, and thus Vi(t). The battery charger 7 also measures the input frequency, and thus the Vi(t) zero-crossing times. Specifically, the Vi(t) zero-crossing times are measured by a zero-crossing detector 13 that is connected to Vₘ(t) via two connections. The zero-crossing detector 13 is located within the battery charger 7. The battery charger 7 also includes a Vₘ(t) measurement unit 15 that measures the voltage and frequency of the power supply Vₘ(t). In addition, the battery charger 7 includes a V_{c}(t) measurement unit 11 which measures the voltage V_{C}(t) on the capacitor C. However, it is possible that the zero-crossing detector 13, the Vₘ(t) measurement unit 15, and the V_{C}(t) measurement unit 11 could be located within the microcontroller 9 and/or their functions performed by the microcontroller. Also, the zero-crossing detector 13, the Vₘ(t) measurement unit 15, and the V_{c}(t) measurement unit 11 could be located in another device or in a different configuration.

Figure 6 also shows a microcontroller 9 contained within the battery charger 7. However, it is envisioned that the microcontroller 9 could be located external to the battery charger 7. The microcontroller 9 receives signals outputted by the zero-crossing detector 13, the Vₘ(t) measurement unit 15, and the V_{c}(t) measurement unit 11. The microcontroller 9 includes software algorithms that are used to control the timing of switching the thyristors Tr1 and Tr2 ON and OFF. For example, microcontroller 9 includes a memory 35, which stores a table which stores various closing periods of the thyristors. The stored table in the microcontroller 9 could be a timing advancement table 21, which stores a plurality of advance times tₙ, for example, t₁,...tₙ,...t₁₀₀, etc. The microcontroller 9 synchronizes the switching of the thyristors Tr1 and Tr2 on zero crossings and controls the progressive triggering of the thyristors Tr1 and Tr2. The microcontroller 9 also includes a step counter unit 19, a voltage A/D & difference unit 23, a time measurement unit 25, a next zero-crossing forecast unit 27, a thyristor trigger time calculation unit 29, and a memory 35. However, it is possible that these units are arranged in a different configuration or are present in a different device than as shown in Figure 6.

The thyristor trigger time calculation unit 29 receives an input tₙ from the timing advancement table 21 and a timing input t_{z} from the next zero-crossing forecast determination unit 27. The thyristor trigger time calculation unit 29 calculates a thyristor trigger time tₜᵣ, by subtracting tₙ from t_{z}, (i.e. tₜᵣ = t_{z} - tₙ). The thyristor triggering stage 17 receives the calculated thyristor trigger time tₜᵣ from the thyristor trigger time calculation unit 29, and generates thyristor gate inputs V_{Tr1} and V_{Tr2} which are used to control whether thyristors Tr1 and Tr2 are turned on, respectively. It is possible that the thyristor trigger time calculation unit 29 calculates the thyristor trigger time tₜᵣ, based on an advance time tₙ and a zero-crossing t_{z} using a formula.

A high voltage (HV) battery and/or vehicle loads 33 can be connected to the output of the charger power stage 5. Similarly, Figure 6 shows that the voltage source Vₘ(t) can be located in a home 31 and the outputs of the voltage source Vₘ(t) are connected to the inputs of the charger power stage 5.

As synchronization is controlled by the microcontroller 9 to be at or slightly before the zero-crossing, if Vi(t) = V sin(ωt), then the current through the capacitor C will be proportional to cos(ωt), that is, greater when the voltage change rate is greater, at zero-crossings. By controlling the start of charging to be near to the voltage zero-crossing, the initial current peak during charging will be higher than at the end of charging, when Vc(t) will be nearly equal to Vi(t) peak, and the respective thyristor will close nearly at Vi(t) peak, when there is the minimum voltage change rate. As every current peak will generate EMC, it is advantageous to have even-EMC-emitting current peaks during the charging process. Thus, in an embodiment of the present invention, charging is controlled by the microcontroller 9 so that there are narrower (i.e. shorter) closings of the thyristors at the beginning of charging and wider (i.e. longer) closings at the end of charging. If Vi(t) evolves like a sin(ωt), closing periods may progress like sines, that is, with a minimum value near Vi(t) zero-crossing and a maximum at Vi(t) maximum and with a sinusoidal progression.

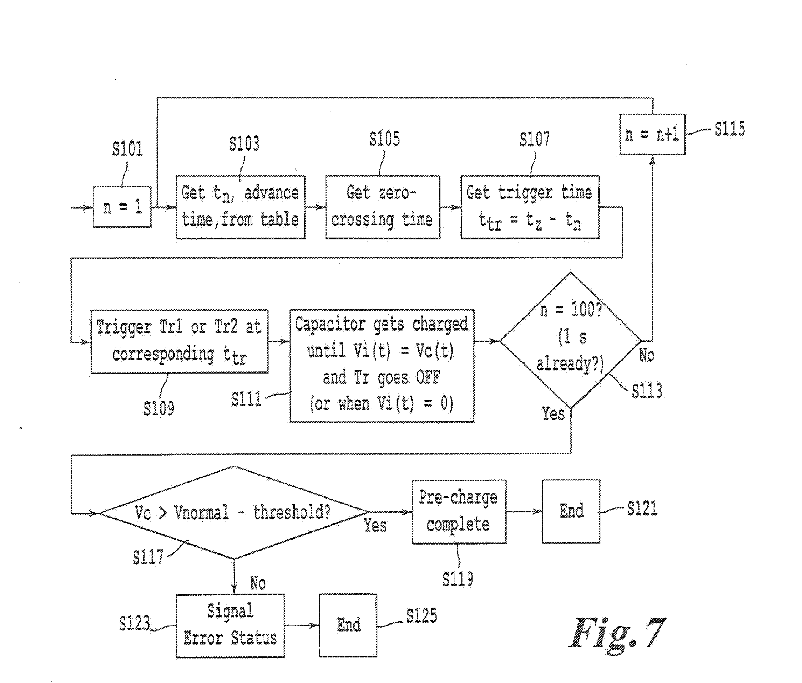

Turning now to Figure 7, Figure 7 is a flow chart showing a charging procedure of an embodiment of the present invention. In this example, in step S101, a pre-charging process is begun. The pre-charging time in this exemplary embodiment is 1 second and the frequency is 50 kHz (other periods and frequency are possible). Based on the pre-charging time of 1 second and the frequency of 50 kHz, there will be 50 periods of 20 ms each. With full-wave rectifying, there will be 100 half-periods, each one of 10 ms. Using a table stored in a memory, for example the memory 35 in the microcontroller 9, then there will be 100 values of time advance (tₙ), following a sinusoidal widening progression (from 0 to input signal peak).

As each zero-crossing is detected by the battery charger 9, it is forecasted when the time of the next zero-crossing of Vi(t) will happen by the next zero-crossing forecast determination unit 27, and trigger each thyristor Tr1 and Tr2 in advance of the next zero-crossing. The moment the battery charger 7 is connected to the Vm(t) in the home mains 31, the voltage regulators stabilize supply voltages, the microcontroller 9 initializes and the main capacitor block will get charged. As this charging of the capacitor has to be done before any operation of the battery charger 7, this process is called pre-charging of the capacitor C. The pre-charging will not be done once the battery charger 7 is working, but the capacitor block will get charged and discharged following the requirements of the HV battery and other vehicle loads 33, and according to the battery charger 7 working algorithms.

In step S101, the n value is used as a counter with n initialized to 1 at the beginning of the process, i.e. n=1. In the example in Figure 7, the pre-charging process is 1 second in total length. As the mains frequency is, for example, 50 kHz (period = 20 ms), and the charging occurs only in the moments from zero-crossing to maximum (second and third quarters per period), there will be 100 "moments" to activate the thyristors.

In step S103, an advance time tₙ is obtained from a table in a memory. The advance time tₙ could be obtained from the timing advance table 21 stored in the memory 35 in the microcontroller 9. It is possible that tₙ could be stored in a format other than a table. The microcontroller 9 searches the table in the memory 35 and obtains the "advance time" related with the respective "count" (t₁, t₂, t₃,...tₙ..., t₁₀₀).

In step S105, based on the zero-crossing detector 13 in the microcontroller 9, the time at which the next zero-crossing t_{z} will happen can be estimated.

In step S 107, the trigger time tₜᵣ is calculated by tₜᵣ = t_{z} - t_{n.} By subtracting the just read tₙ from the forecasted t_{z} we will have the moment we need to close the respective thyristor to start the respective charging step. The calculation of tₜᵣ is performed by the microcontroller 9.

In step S109, Tr1 or Tr2 is triggered at a corresponding trigger time tₜᵣ. When triggering the thyristors, the microcontroller 9 sends the trigger time tₜᵣ to the thyristor triggering stage 17 circuit that is in charge of converting the microcontroller 9 output to a signal capable to triggering the respective thyristor (Tr1 or Tr2, according to thyristor laws).

Next, in step S111, the capacitor C is charged until Vi(t)= Vc(t) and Tr goes OFF (or when Vi(t)=0).

In step S113, it is checked whether n is equal to 100, in other words it is determined if one second has elapsed yet. Thus, in this step it is checked how many times we have stepped the charge into the capacitor. As we described above, there has to be 100 steps (in the example of 1s and 50 kHz). If it is determined that n=100, that is, we have already done 100 steps and 1s has passed, the charge should be finished and the loop exits and proceeds to step S119. Otherwise, the counter is incremented in step S115 to n = n + I, and the process is started again. All the functions in step S113 are performed by the microcontroller 9. However, it is possible that any functions performed by the microcontroller 9 could be performed by two or more microcontrollers.

In step S 117, it is determined whether Vc > Vn - Vt. In this step it is verified whether the pre-charge is successfully completed. That is, whether the capacitor voltage is higher than a "nominal" voltage Vn (normally near to the Vi peak) minus a threshold voltage Vt to cope with tolerances. This comparison is done by the microcontroller 9 from data received from the measuring circuits in the battery charger 7. If the pre-charge is completed correctly in step S 119, the microcontroller 9 ends the pre-charge in step S121 and continues with other tasks. If, on the contrary, the capacitor charge is lower than it should be, the microcontroller 9 signals a "Pre-Charge Error" status in step S 123 prior to ending the process in step S125. It is possible that the microcontroller 9 will handle this error flag from step S123 and will execute a respective error-solving procedure. For example, the microcontroller 9 may chose to start another charging process, or to send a "fault" message to a vehicle system. During the charging process (which occurs after the pre-charging process), the HV battery is charged from the AC input.

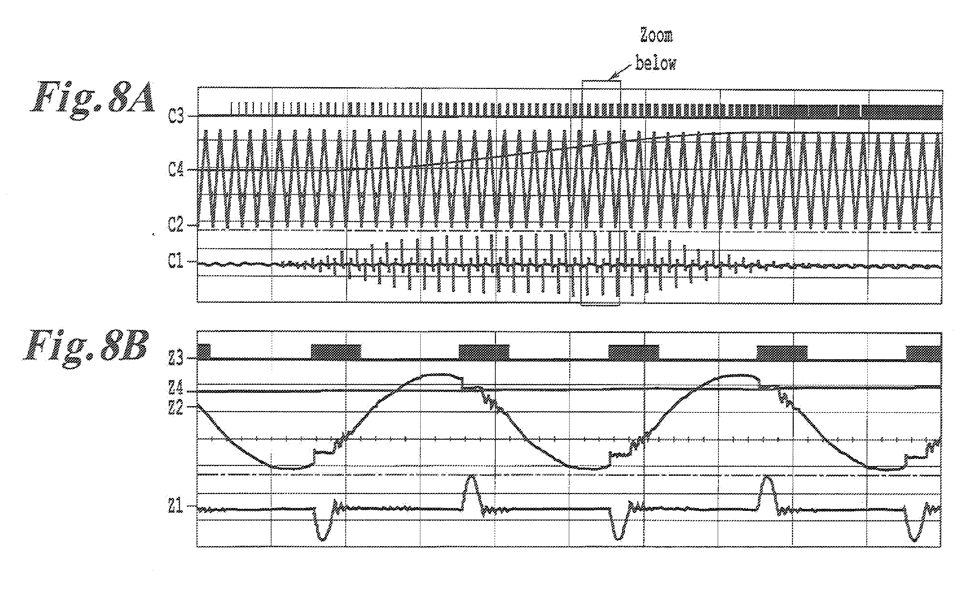

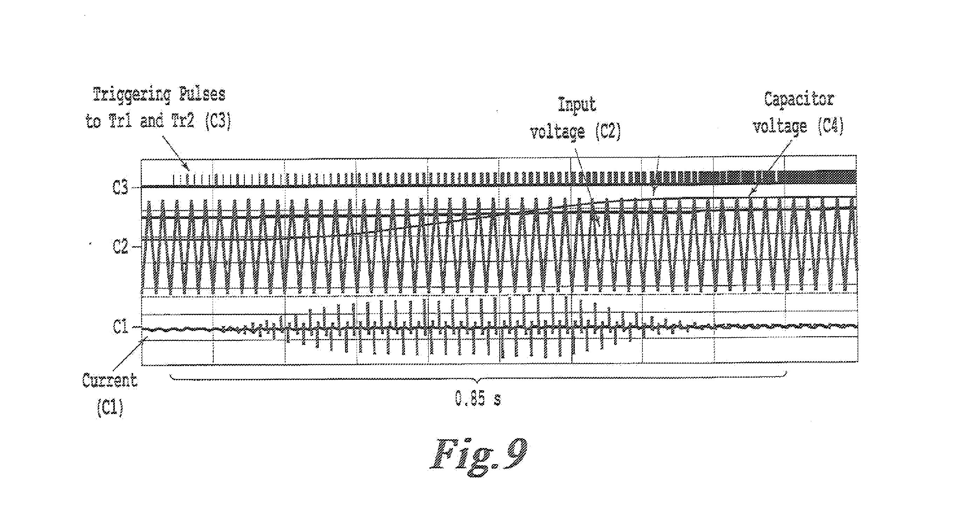

Turning now to Figures 8A and 8B, these figures show exemplary oscilloscope scans of various signals involved in the soft-start charging process of the present invention. Figure 8B is a zoomed in oscilloscope scan of a portion of Figure 8A. In Figures 8A and 9, the signal C1 is a current signal. The signal C2 is the input voltage, and the signal C3 is the triggering pulses for thyristors Tr1 and Tr2. The capacitor voltage is shown as signal C4, and Figures 8A and 9 show that the capacitor voltage increases linearly and thus the average capacitor current is constant. Signal C3, the triggering pulses of the thyristors, increase in signal pulse width as the charging process proceeds with time. The current pulses shown by signal C1 are affected by inductances, circuit loses, etc. in the filter I in Figure 5. However, the current pulses shown in Figures 8A and 9 exhibit a fairly stable behavior. Without the start-up procedure of the present invention, the starting peaks of the current would be much higher and thus increase unwanted EMI. In Figure 9, a charging period of 0.85s is shown, and the capacitor is charged up to the point where the capacitor voltage C4 levels out (i.e. becomes a horizontal line with a slope of zero).

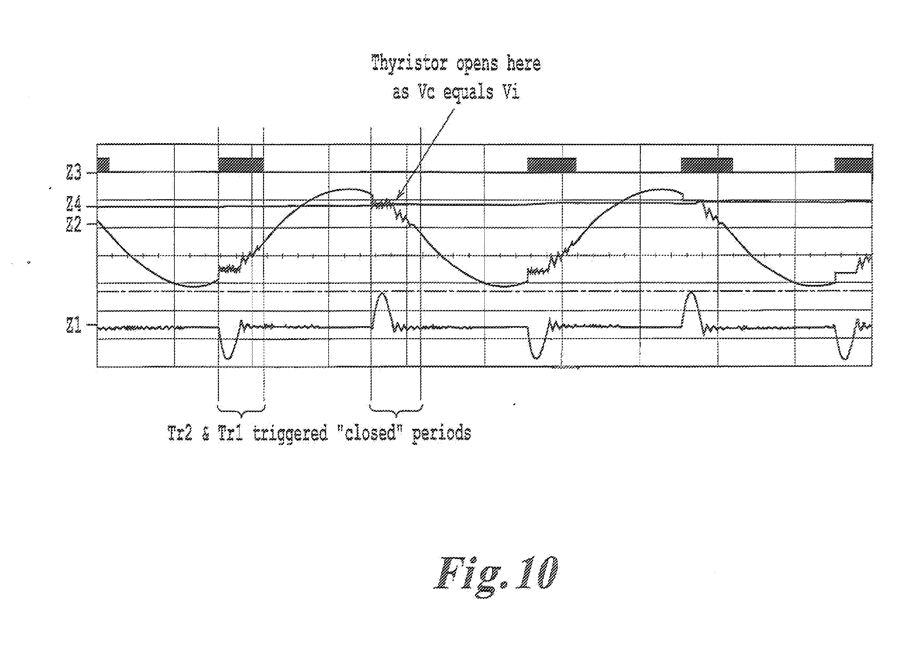

In Figures 8B and 10, the signal Z1 is the current and signal Z2 is the input voltage. Signal Z3 is the triggering pulses for the thyristors Tr1 and Tr2. When signal Z3 is high, the thyristor is closed, and conducting. The capacitor voltage is shown as signal Z4. The thyristor opens when Vc equals Vi. That is, when the voltage values of Z2 and Z4 are equal.

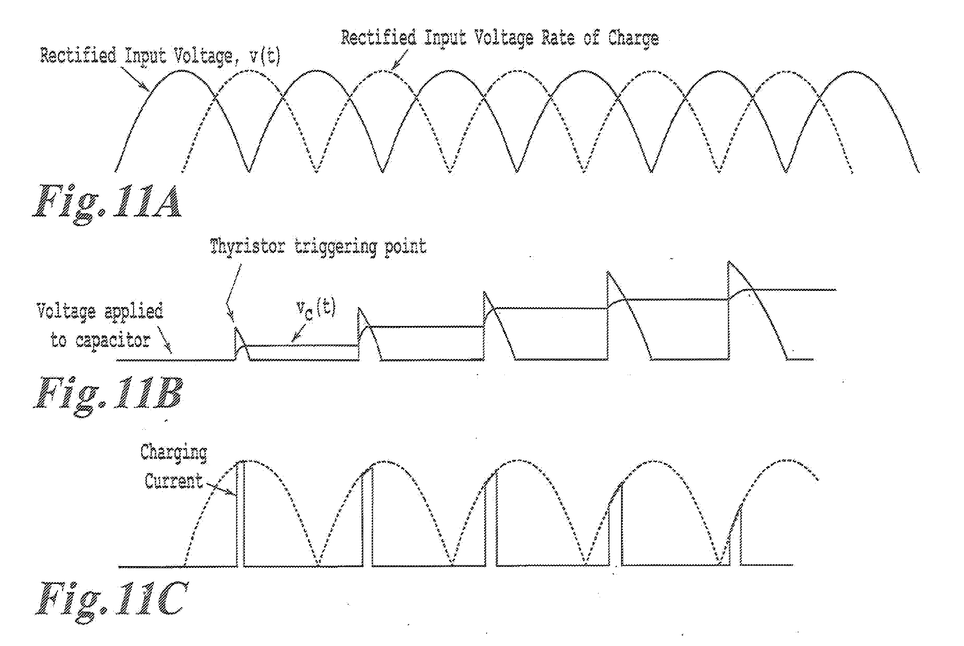

Figure 11A shows a graph with a rectified input voltage signal v(t), shown as a solid line and a rectified input voltage rate of change, which is approximately the shape of the waveform of the current i(t) at the capacitor, shown in broken lines. In Figure 11A, the current at the capacitor is shifted half a phase from the rectified input voltage.

Figure 11B shows a graph showing various thyristor triggering points. Figure 11B shows an example that has five thyristor triggering points, the thyristor triggering points are located at the top of the voltage spikes. Figure 11B also shows the stepwise increase of the capacitor voltage Vc(t). In Figure 11B, the thyristor "output" would "follow" the input voltage. Also, the thyristor is triggered to be closed until the input voltage zero-crossing, (when the input voltage becomes zero) at which point the thyristor will open on its own when the anode-to-cathode voltage gets to zero volts.

Figure 11C shows the charging current that is applied to the capacitor during progressive charging steps. As the time of charging progresses, the peak or height of the current decreases, while the amount of time the current is applied increases. By keeping the amount of time the thyristor is closed short at the beginning of the charging method (high current) and long at the end of the charging method (low current), energy flow is kept approximately constant for each charging step. That is, for each charging current spike shown in Figure 11C, the area under the curve of the spike (width times length) is approximately equal.

The above described charging methods and circuits could be applied to automobiles, boats, and other vehicles utilizing electrical energy.

Obviously, numerous modifications and variations of the present invention are possible in light of the above teachings. It is therefore to be understood that within the scope of the appended claims, the invention may be practiced otherwise than as specifically described herein.

## Claims

1. A soft-start charging method for at least one capacitor, the method comprising:
obtaining a zero-crossing time, which is a time when a zero-crossing of a source voltage will occur;
obtaining an advance time, which is an amount of time;
calculating a trigger time based on the advance time and the zero-crossing time;
triggering a switch to close at the calculated trigger time;
charging the at least one capacitor with the source voltage with the closing of the switch for a charging time period;
opening the switch at the end of the charging time period; and
repeating the obtaining the zero-crossing time, the obtaining the advance time, the calculating, the triggering, the charging, and the opening steps until the at least one capacitor is fully charged.

2. The soft-start charging method of Claim 1, further comprising:
controlling the closing of the switch in advance of the zero-crossing of the voltage source at progressively earlier times by increasing the advance time.

3. The soft-start charging method af Claim 1, further comprising:
varying an amount of time of the charging time period in a sinusoidal manner based on the source voltage.

4. The soft-start charging method of Claim 1, further comprising:
obtaining a short advance time in order to trigger the switch to close at a time slightly before the zero-crossing time of the voltage source to provide a low voltage difference between the source voltage and a voltage of the at least one capacitor during pre-charging.

5. The soft-start charging method of Claim 1, wherein the switch is at least one thyristor.

6. The soft-start charging method of Claim 1, wherein the obtained advance time is stored in a memory.

7. The soft-start charging method of Claim 1, wherein the obtained advance time is stored in a table in a memory of a microcontroller.

8. A non-transitory computer-readable storage medium storing instructions which when executed by a processor cause a soft-start charging method to be performed, the method comprising:
obtaining a zero-crossing time, which is a time when a zero-crossing of a source voltage will occur;
obtaining an advance time, which is an amount of time;
calculating a trigger time based on the advance time and the zero-crossing time;
triggering a switch to close at the calculated trigger time;
charging the at least one capacitor with the source voltage with the closing of the switch for a charging time period;
opening the switch at the end of the charging time period; and
repeating the obtaining the zero-crossing time, the obtaining the advance time, the calculating, the triggering, the charging, and the opening steps until the at least one capacitor is fully charged.

9. The non-transitory computer-readable storage medium of Claim 8, further comprising:
controlling the closing of the switch in advance of the zero-crossing of the voltage source at progressively earlier times by increasing the advance time.

10. The non-transitory computer-readable storage medium of Claim 8,
varying an amount of time of the charging time period in a sinusoidal manner based on the source voltage.

11. The non-transitory computer-readable storage medium of Claim 8, further comprising:
obtaining a short advance time in order to trigger the switch to close at a time slightly before the zero-crossing time of the voltage source to provide a low voltage difference between the source voltage and a voltage of the at least one capacitor during pre-charging.

12. The non-transitory computer-readable storage medium of Claim 8, wherein the switch is at least one thyristor.

13. The non-transitory computer-readable storage medium of Claim 8, wherein the obtained advance time is stored in a memory.

14. The non-transitory computer-readable storage medium of Claim 8, wherein the obtained advance time is stored in a table in a memory of a microcontroller.

15. A soft-start charging apparatus for charging at least one capacitor, the apparatus comprising:
a switch;
a zero-crossing unit configured to obtain a zero-crossing time, which is a time when a zero-crossing of a source voltage will occur;
an advance time unit configured to obtain an advance time, which is an amount of time;
a trigger time calculation unit configured to calculate a trigger time based on the advance time and the zero-crossing time;
a triggering unit configured to trigger the switch to close at the calculated trigger time; and
a charging unit configured to charge the at least one capacitor with the source voltage with the closing of the switch for a charging time period,
wherein the switch is opened at the end of the charging time period, and obtaining the zero-crossing time, obtaining the advance time, calculating of the trigger time, triggering the switch to close, charging the capacitor, and opening the switch are repeated until the at least one capacitor is fully charged.

16. The soft-start charging apparatus of Claim 15, wherein closing of the switch in advance of the zero-crossing of the voltage source at progressively earlier times is controlled by increasing the advance time.

17. The soft-start charging apparatus of Claim 15, wherein an amount of time of the charging time period is varied in a sinusoidal manner based on the source voltage.

18. The soft-start charging apparatus of Claim 15, wherein the advance time unit obtains a short advance time in order to trigger the switch to close at a time slightly before the zero-crossing time of the voltage source to provide a low voltage difference between the source voltage and a voltage of the at least one capacitor during pre-charging.

19. The soft-start charging apparatus of Claim 15, wherein the switch is at least one thyristor.

20. The soft-start charging apparatus of Claim 15, wherein the obtained advance time is stored in a memory.
